(19) Europäisches Patentamt / European Patent Office / Office européen des brevets

(11) **EP 2 147 710 B1**

(12) **FASCICULE DE BREVET EUROPEEN**

(45) Date de publication et mention
de la délivrance du brevet:
**16.03.2011 Bulletin 2011/11**

(51) Int Cl.:
***B01D 21/26*** *(2006.01)*   ***E02B 3/02*** *(2006.01)*
***F03B 11/08*** *(2006.01)*

(21) Numéro de dépôt: **09165613.2**

(22) Date de dépôt: **16.07.2009**

(54) **Dispositif de séparation de particules solides de l'eau et installation hydraulique comprenant un tel dispositif**

Vorrichtung zum Abtrennen von Feststoffpartikeln aus Wasser sowie hydraulische Einrichtung mit einer solchen Abtrennvorrichtung

Apparatus for the separation of solid particles from water and hydraulic installation containing such separation apparatus

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **18.07.2008 FR 0854902**

(43) Date de publication de la demande:
**27.01.2010 Bulletin 2010/04**

(73) Titulaire: **Alstom Hydro France
92300 Levallois Perret (FR)**

(72) Inventeur: **Prigent, Serge
38700, LE SAPPEY EN CHARTREUSE (FR)**

(74) Mandataire: **Myon, Gérard Jean-Pierre et al
Cabinet Lavoix Lyon
62, rue de Bonnel
69448 Lyon Cedex 03 (FR)**

(56) Documents cités:
**EP-A- 0 199 495      EP-A- 0 826 405
EP-A- 1 407 807      EP-A- 1 942 329
WO-A-93/07946        WO-A-2004/042202
DE-B- 1 129 458      DE-C- 421 266
DE-C- 742 832        DE-C- 867 541
FR-A- 2 552 071      US-A- 1 960 485
US-A- 3 507 479      US-A- 5 248 421**

**Description**

L'invention a trait à un dispositif de séparation de particules solides et de l'eau d'un écoulement ainsi qu'à une installation de conversion d'énergie comprenant un tel dispositif.

Dans le domaine des installations de conversion d'énergie hydraulique en énergie électrique ou mécanique, il est connu d'alimenter une machine hydraulique, telle qu'une turbine, avec un écoulement d'eau qui interagit avec les aubes ou les pâles de la turbine. En fonction des conditions météorologiques et de la nature du sol qu'il traverse, cet écoulement peut être plus ou moins chargé en particules solides, par exemple en grains de sable, qui usent les parties de la machine avec lesquelles l'écoulement vient en contact.

Divers dispositifs sont connus pour retenir ou séparer ces particules solides de l'eau de l'écoulement. Il s'agit notamment de barrages et bassins de sédimentation, de grilles de filtration et de tunnel de dessablage. Un tunnel de dessablage est un conduit ménagé en sous-sol et dans lequel l'écoulement destiné à alimenter une machine hydraulique progresse à vitesse relativement lente, ce qui permet à une partie au moins des particules solides contenues dans l'écoulement en entrée de se déposer sur une grille de fond du tunnel, par sédimentation. Compte tenu de la vitesse de sédimentation de ces particules, il est nécessaire que le tunnel soit long, notamment d'une longueur supérieure à 150 mètres, et présente une section transversale d'aire suffisante pour réduire la vitesse de l'écoulement à un niveau compatible avec la vitesse de sédimentation. Il en résulte des travaux de génie civil importants qui majorent d'autant les coûts de mise en service et les coûts d'exploitation d'une installation hydraulique connue. En outre, de tels tunnels de dessablage sont peu efficaces dans la mesure où la teneur en particules solides n'est réduite que de 50% environ suite au passage d'un écoulement dans un tel dispositif.

C'est à ces inconvénients qu'entend plus particulièrement remédier l'invention en proposant un nouveau dispositif de séparation grâce auquel des particules solides peuvent être efficacement séparées de l'eau d'un écoulement, alors que son encombrement est sensiblement réduit par rapport à un tunnel de dessablage et que son efficacité est améliorée.

A cet effet, l'invention concerne un dispositif de séparation de particules solides et de l'eau d'un écoulement d'alimentation d'une machine hydraulique de type turbine, pompe ou turbine-pompe, ce dispositif comprenant une zone d'entrée de l'écoulement et une zone de sortie de l'écoulement décalées le long d'un axe de progression de l'écoulement dans le dispositif. Ce dispositif est caractérisé en ce qu'il comprend plusieurs conduits disposés en parallèle chacun avec une embouchure et une extrémité aval, entre la zone d'entrée et la zone de sortie, en ce que chaque conduit présente, en coupe perpendiculaire à l'axe de progression, une section en forme de spirale avec un rayon de courbure croissant de l'embouchure vers l'extrémité aval ou de l'extrémité aval vers l'embouchure, en ce que chaque conduit présente une épaisseur, prise selon une direction globalement radiale par rapport à l'axe de progression précité, inférieure à 10% de la largeur de ce conduit, prise parallèlement à cet axe et en ce que chaque conduit est équipé, en sortie, d'un séparateur de flux apte à séparer une première portion d'un écoulement unitaire circulant dans ce conduit, fortement chargée en particules solides par effet centrifuge, d'une deuxième portion de cet écoulement, qui est moins chargée en particules solides.

Grâce à l'invention, les différents conduits à section en forme de spirale, permettent d'utiliser la force centrifuge pour séparer les particules solides de l'eau de l'écoulement et leur épaisseur, faible comparée à leur largeur, est compatible avec un temps de sédimentation relativement court qui résulte de la vitesse acquise par l'écoulement dans chaque spirale. La forme des différents conduits permet de traiter un débit d'écoulement élevé compatible avec l'alimentation d'une machine hydraulique de forte puissance. En outre, la structure du dispositif, avec plusieurs conduits disposés en parallèle, permet que ce dispositif soit compact, ce qui minore les travaux de génie civil et les coûts associés.

Selon des aspects avantageux mais non obligatoires de l'invention, un tel dispositif peut incorporer une ou plusieurs des caractéristiques suivantes :

- L'épaisseur de chaque conduit est inférieure à 5%, de préférence inférieure à 1%, de la largeur de ce conduit.
- L'épaisseur de chaque conduit a une valeur inférieure à 100 mm, de préférence inférieure à 60 mm, de préférence encore de l'ordre de 50 mm.
- Chaque conduit a une section d'entrée de forme rectangulaire aplatie, avec sa plus grande dimension parallèle à l'axe de progression précité.
- Le séparateur de flux est avantageusement formé par une cloison disposée dans le conduit au voisinage et à distance d'une cloison radiale du conduit.
- Chaque conduit comprend, au voisinage de son entrée, une zone dont le rayon de courbure, mesuré dans un plan perpendiculaire à l'axe de progression, est inférieur à 25% du rayon de courbure maximum du conduit dans ce plan.
- Selon un mode de réalisation de l'invention, les conduits sont imbriqués les uns dans les autres autour de l'axe de progression. En variante, les conduits sont répartis, chacun dans un secteur angulaire, autour de l'axe de progression.
- Chaque conduit est formé par une ou deux tôles métalliques qui sont rectilignes selon leur direction parallèle à l'axe de progression.

L'invention concerne également une installation de conversion d'énergie hydraulique en énergie électrique ou mécanique, ou inversement, cette installation comprenant une machine hydraulique de type turbine, pompe ou turbine-pompe ainsi qu'une ligne d'alimentation en eau de cette machine. Cette installation est caractérisée en ce qu'elle comprend également au moins un dispositif de séparation de particules solides et d'eau tel que mentionné ci-dessus.

Une telle installation est plus facile à mettre en service et plus économique que celles de l'état de la technique.

L'invention sera mieux comprise et d'autres avantages de celle-ci apparaîtront plus clairement à la lumière de la description qui va suivre de deux modes de réalisation d'un dispositif de séparation et d'une installation de conversion d'énergie conformes à son principe, donné uniquement à titre d'exemple et faite en référence aux dessins annexés dans lesquels :

- la figure 1 est une représentation schématique de principe d'une installation conforme à l'invention ;

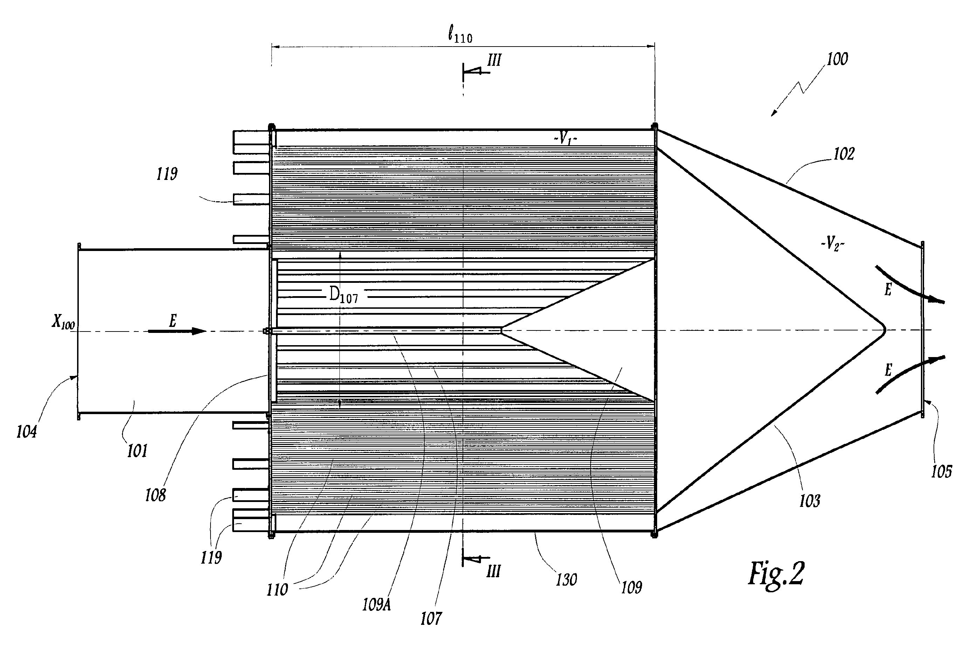

- la figure 2 est une vue à plus grande échelle du dispositif de séparation de particules solides de l'installation de la figure 1, cette figure correspond au détail II à la figue 1 ;
- la figure 3 est une demi coupe selon la ligne III-III à la figue 2, on y a indiqué en II-II le plan de coupe de la figure 2 ;
- la figure 4 est une coupe dans le même plan que la figure 2 mais à plus petite échelle et représente un des conduits de séparation du dispositif des figures 2 et 3 ;
- la figure 5 est une coupe selon la ligne V-V à la figue 4, on y a indiqué en IV-IV le plan de coupe de la figure 4 ;
- la figure 6 est une vue à plus grande échelle du détail VI à la figure 5 ;
- la figure 7 est une vue à plus grande échelle du détail VII à la figure 3 ;

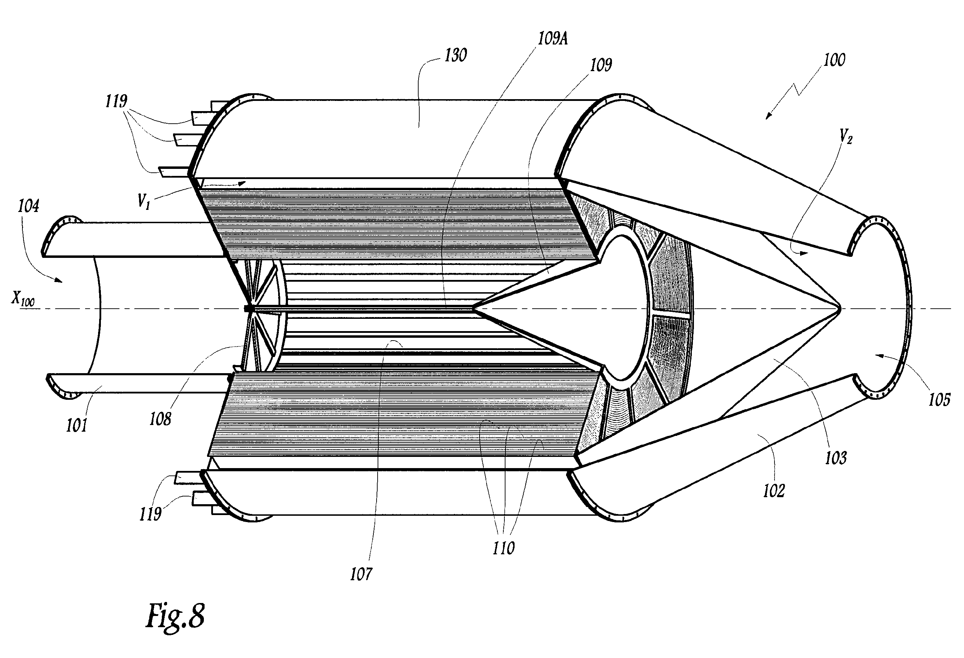

- la figure 8 est une vue en perspective, avec arrachement partiel, du dispositif des figures 2 à 7 ;

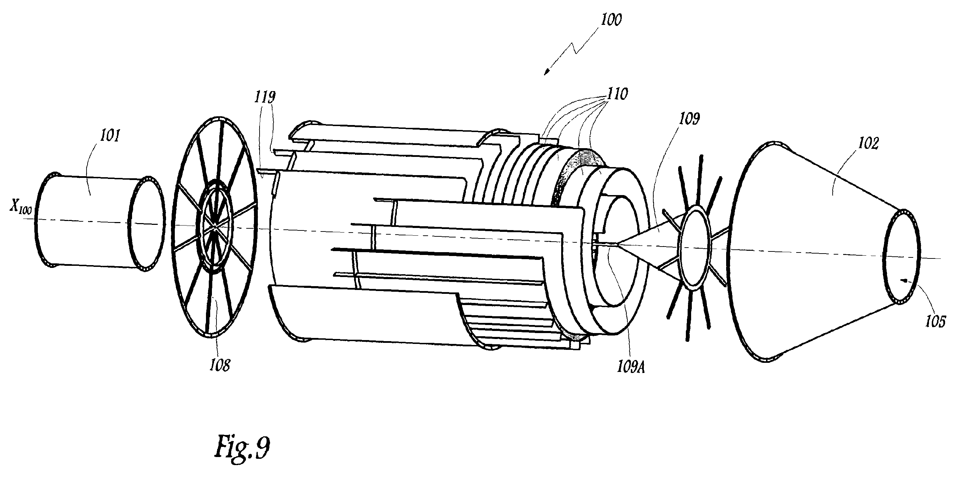

- la figure 9 est une vue en perspective éclatée de certaines parties du dispositif des figures 2 à 8 ;
- la figure 10 est une coupe axiale analogue à la figure 2 pour un dispositif conforme à un deuxième mode de réalisation ;
- la figure 11 est une demi coupe selon la ligne XI-XI à la figue 10, on y a indiqué en X-X le plan de coupe de la figure 10 ;
- la figure 12 est une vue à plus grande échelle du détail XII à la figure 11 ;
- la figure 13 est une coupe partielle selon la ligne XIII-XIII à la figure 11 ;
- la figure 14 est une vue en perspective avec arrachement partiel, du dispositif des figures 10 à 13 et

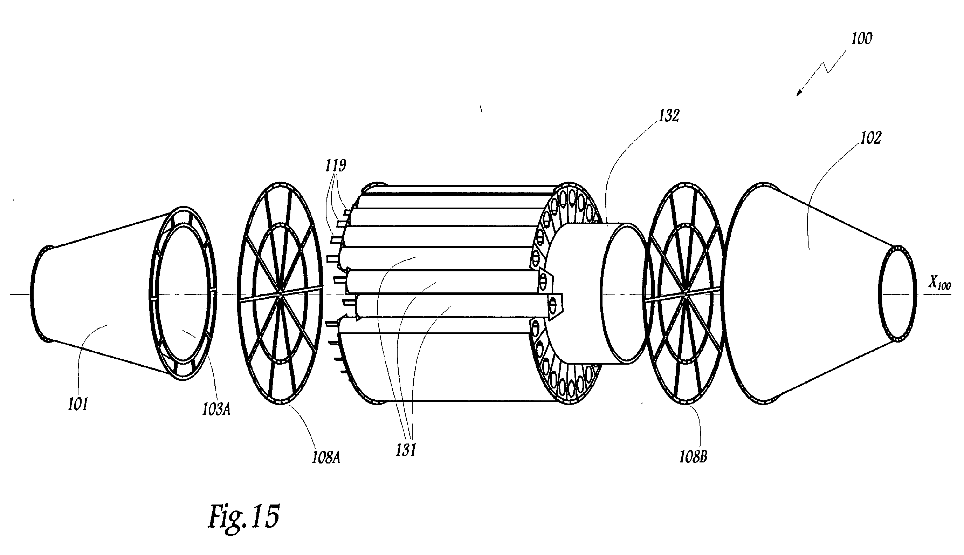

- la figure 15 est une vue en perspective éclatée de certaines parties du dispositif des figures 10 à 14.

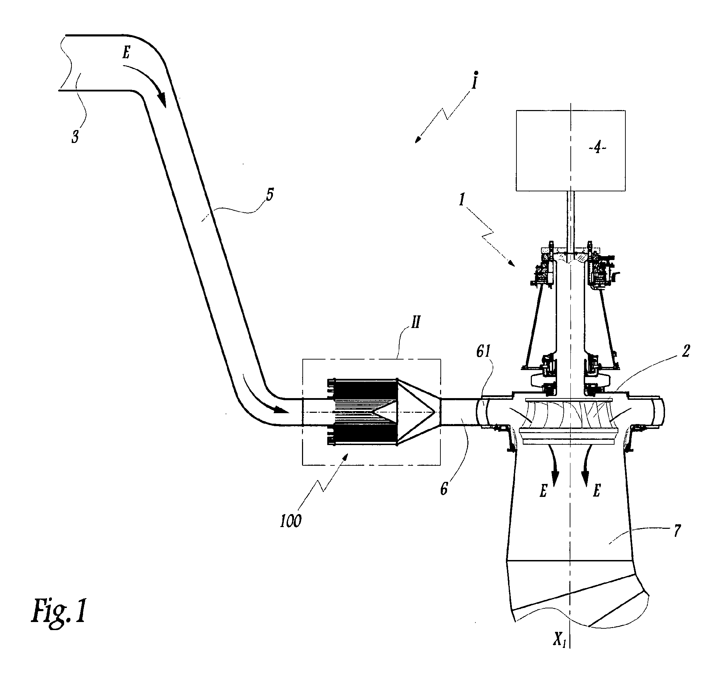

L'installation 1 représentée à la figure 1 comprend une turbine 1 de type Francis dont la roue 2 est destinée à être mise en rotation, autour d'un axe vertical $X_1$, par un écoulement forcé E provenant d'une prise d'eau 3 qui prélève l'écoulement dans un réservoir, tel qu'un barrage, ou sur un cours d'eau sans retenue. La turbine 1 est couplée à un alternateur 4 qui délivre un courant alternatif à un réseau non représenté, en fonction de la rotation de la roue 2.

Une conduite forcée 5 d'amenée de l'écoulement E à la roue 2 s'étend entre la prise d'eau 3 et une bâche 6 équipée d'un distributeur 61 de régulation de l'écoulement E. Une conduite d'aspiration 7 est prévue pour évacuer l'écoulement E en aval de l'installation I.

Un dispositif 100, intercalé entre la prise d'eau 3 et la bâche 6, est utilisé pour séparer les particules solides se trouvant dans l'écoulement E de l'eau constitutive de cet écoulement. Le dispositif 100 comprend un conduit d'entrée 101 de forme cylindrique à section circulaire centré sur un axe horizontal $X_{100}$ qui constitue un axe longitudinal du dispositif 100. En sortie, le dispositif 100 est pourvu d'un collecteur 102 de forme tronconique disposée autour d'une partie 103 en pointe, de forme conique. L'orifice d'entrée 104 du conduit 101 constitue l'entrée du dispositif 100, alors qu'une ouverture circulaire 105 ménagée à l'extrémité du collecteur 102 constitue un orifice de sortie de l'écoulement E. L'orifice 104 est destiné à être raccordé en partie basse de la conduite 5, alors que l'ouverture 105 est destinée à être raccordée à l'entrée de la bâche 6.

Entre les zones d'entrée et de sortie 104 et 105 du dispositif 100, l'écoulement E progresse parallèlement à l'axe $X_{100}$.

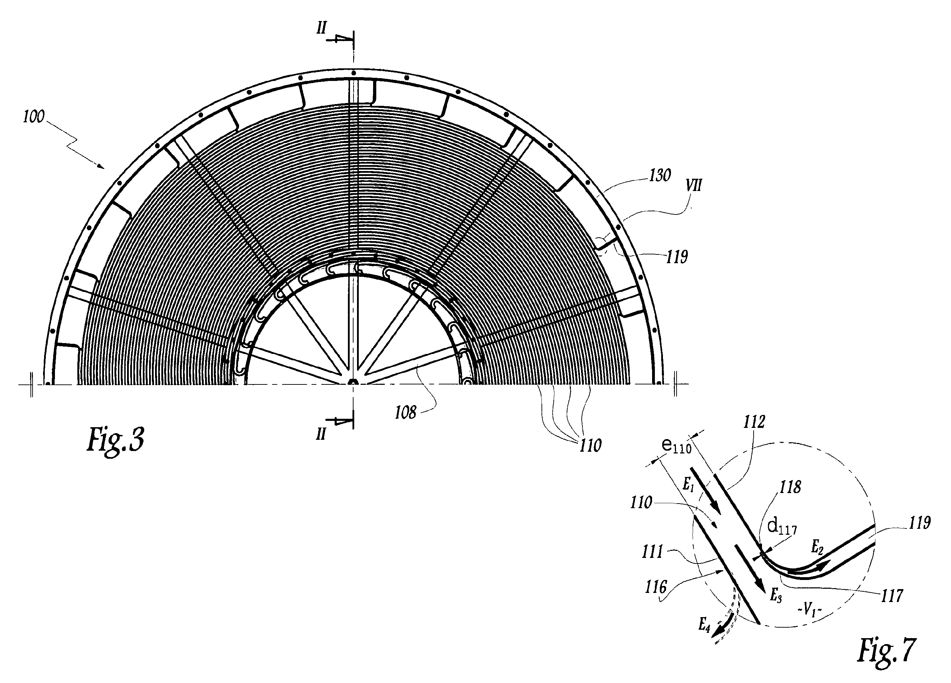

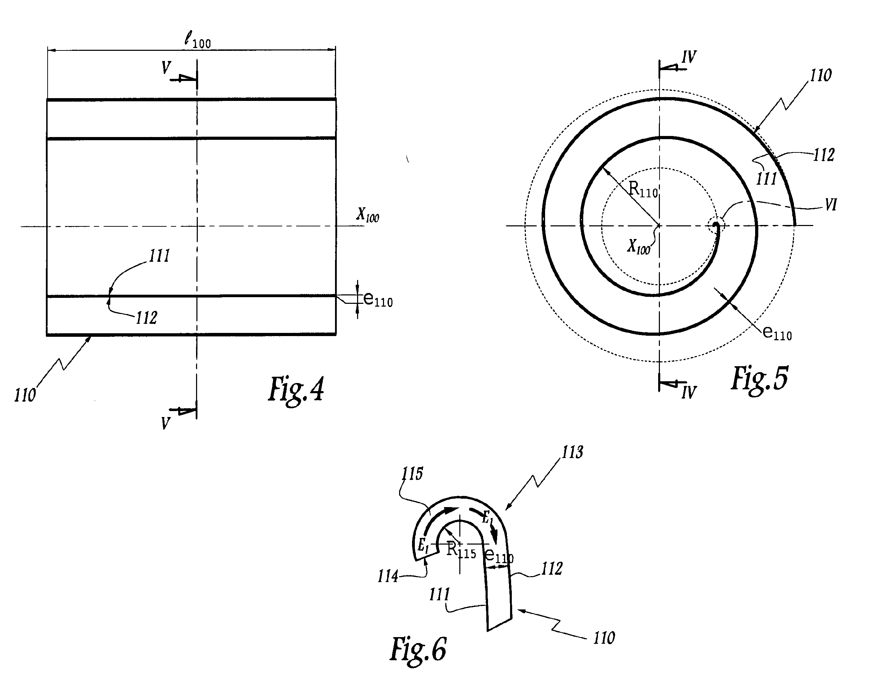

Entre le conduit 101 et le collecteur 102, le dispositif 100 comprend vingt-cinq conduits 110 imbriqués les uns dans les autres et disposés en spirale autour de l'axe $X_{100}$. Chaque conduit 110 a, dans un plan perpendiculaire à l'axe $X_{100}$ et comme représenté aux figures 3 et 5 une section en forme de spirale. Chaque conduit 110 est délimité entre une tôle interne 111 et une tôle externe 112. La tôle interne 111 d'un premier conduit peut jouer le rôle de tôle externe 112 pour un conduit adjacent situé radialement à l'intérieur du premier conduit. De la même façon, la tôle externe 112 d'un premier conduit peut jouer le rôle de tôle interne pour un second conduit adjacent situé radialement à l'extérieur du premier conduit

Les vingt-cinq conduits 110 sont imbriqués dans la mesure où, sur l'essentiel de sa longueur, chaque conduit 110 est situé radialement entre deux autres conduits 110, comme cela ressort de la figure 3. Les conduits 110 ont tous les mêmes longueurs, largeurs et épaisseurs.

La longueur $L_{110}$ d'un conduit 110 est sa longueur développée autour de l'axe $X_{100}$. En d'autres termes, la longueur d'un conduit 110 est sa longueur visible à la figure 5. La largeur $l_{100}$ d'un conduit 110 est sa dimension parallèle à l'axe $X_{100}$ L'épaisseur $e_{110}$ d'un conduit 110 est son épaisseur radiale, c'est-à-dire la distance entre ses tôles interne et externe. En pratique, la longueur $L_{110}$ d'un conduit 110 est de l'ordre de 20 mètres, alors que sa largeur $l_{110}$ est de l'ordre de 10 mètres et que son épaisseur $e_{110}$ est de l'ordre de 50 mm. Ainsi, chaque conduit 110 se présente sous la forme d'une fente de largeur très supérieure à son épaisseur.

En pratique, on choisit l'épaisseur $e_{110}$ inférieure à 100 mm, de préférence inférieure à 60 mm. Des calculs et des essais avec $e_{110}$ égale à 50 mm donnent des résultats satisfaisants.

Compte tenu de la géométrie des différents conduits 110, leurs zones d'entrée respectives sont chacune en forme de rectangle dont la plus grande dimension correspond à la largeur $l_{110}$ et dont la plus petite dimension correspond à l'épaisseur $e_{110}$.

L'invention peut être mise en oeuvre dès lors que le rapport de $e_{110}$ sur $l_{110}$ est inférieur à 0,1. En pratique, il est préférable que ce rapport soit inférieur à 0,05 et même à 0,01. Dans l'exemple représenté, ce rapport est de 50/10000 = 0,005.

Une zone centrale 107 du dispositif 100 est délimitée entre une grille 108 rigidification du dispositif 100 et de retenue des gros déchets, disposée en sortie du conduit 101, et un cône 109 centré sur l'axe $X_{100}$ et convergent vers la grille 108, c'est-à-dire vers l'amont. Une tige de rigidification 109A prolonge le cône 109 jusqu'à la grille 108, en étant également centrée sur l'axe $X_{100}$. Ainsi, l'écoulement d'eau E qui traverse le conduit 101 et la grille 108 parvient dans la zone 107 à partir de laquelle il est dévié par le cône 109 radialement vers l'extérieur par rapport à l'axe $X_{100}$ en pénétrant dans les différents conduits 110. Chaque conduit 110 a une section de passage égale à sa largeur multipliée par son épaisseur, soit $0,05 \times 10 = 0,5 m^2$. Ainsi, la section de passage cumulée des vingt-cinq conduits 110, entre la zone 107 et le volume interne du collecteur 102, est de $25 \times 0,5 = 12,5 m^2$. Ceci permet de traiter un écoulement E de débit important permettant d'alimenter la turbine 1 à plein régime.

Dans ce cas, en considérant que la section $S_5$ de la conduite 5 a une aire de 12,5 m$^2$, et en faisant l'hypothèse que le débit de l'écoulement E dans la conduite 5 et dans le dispositif 100 est le même, la vitesse linéaire de l'écoulement E est conservée entre la conduite 5 et le dispositif 100. Cette vitesse peut être comprise entre 5 m/s et 10 m/s, par exemple égale à 8 m/s.

Il est également possible de prévoir une augmentation de la vitesse linéaire de l'écoulement E dans le dispositif 100, par rapport à sa valeur dans la conduite 5. Par exemple, avec une vitesse linéaire de l'écoulement E dans la conduite 5 égale à 8 m/s, on peut prévoir une vitesse linéaire de l'écoulement E dans les conduits 110 égale à 24 m/s. Une telle valeur de 24 m/s est suffisamment élevée pour induire une séparation effective des particules solides et des molécules d'eau par centrifugation, mais assez basse pour éviter une usure prématurée par abrasion des tôles constitutives du dispositif 100. Une telle usure est en effet constatée pour des vitesses linéaires supérieures à 30 m/s et des concentrations de sable dans l'eau de 1 000 ppm en masse.

On note $V_5$ la vitesse linéaire de l'écoulement E dans la conduite 5. Le débit de cet écoulement dans la conduite est donc :

$$Q_5 = S_5 \times V_5.$$

On note $V_{100}$ la vitesse linéaire de l'écoulement E dans les conduits 110 du dispositif 100. On note $S_{100}$ la somme des aires des conduits 110, cette somme étant égale à $N \times S_{110}$ où N est le nombre de conduits 110 et $S_{110}$ est l'aire de la section transversale d'un conduit 110. $S_{110}$ est égale à $e_{110} \times l_{110}$. Le débit de l'écoulement E dans le dispositif 100 est donc :

$$Q_{100} = S_{100} \times V_{100} = N \times S_{110} \times V_{100} = N \times e_{110} \times l_{110} \times V_{100}.$$

Par conservation du débit, on obtient :

$$Q_5 = Q_{100},$$

sont :

$$S_5 \times V_5 = N \times e_{110} \times l_{110} \times V_{100}.$$

Cette équation permet de dimensionner les conduits 110 quant à leur largeur $l_{110}$ et à leur épaisseur $e_{110}$. Avec l'exemple où $V_{100}$ vaut 24 m/s, alors que $V_5$ vaut 8 m/s et $S_5$ vaut 12,5 m$^2$, on obtient :

$$e_{110} \times l_{110} = (S_5 \times V_5) / (N \times V_{100}) = 1/3 \times S_5/25$$

Pour $e_{110}$ fixée à 50 mm, ceci permet de déterminer la valeur de $l_{110}$, soit :

$$l_{110} = 1/0.05 \times 1/3 \times 12.5/25 = 3.33 \text{ m}$$

Dans ce cas, le rapport $e_{110}/l_{110}$ est de 1,5%.

Si la largeur $l_{110}$ est fixée à 10 m, et l'épaisseur $e_{110}$ est fixée à 50 mm dans le cadre d'une production standardisée des conduits ou tubes 110, on peut jouer sur le nombre de tubes pour obtenir une vitesse prédéterminée dans les tubes 110. Ainsi, avec huit tubes, la vitesse $V_{100}$ devient 25 m/s.

La zone 107 a un diamètre $D_{107}$ de l'ordre de 4 mètres. Les ouvertures d'entrée des différents conduits 110 sont réparties à la périphérie de la zone 107.

On note $R_{110}$ le rayon de courbure d'un conduit 110 dans le plan de la figure 5. Ce rayon de courbure a une valeur croissante de environ 2 mètres à environ 4,7 mètres.

On note $E_1$ une portion élémentaire de l'écoulement E qui transite par un conduit 110. Une telle portion $E_1$ subit une accélération centrifuge due à la forme courbe du conduit 110 dans le plan de la figure 5. Cette accélération s'exerce à la fois sur les molécules d'eau et sur les particules solides présentes dans le conduit 110, avec un effet différencié compte tenu de la différence de densité entre ces molécules et ces particules.

La figure 6 montre la zone amont 113 d'un conduit 110 et en particulier son embouchure 114 qui est d'épaisseur $e_{110}$ comme mentionné précédemment. La zone 113 comprend une partie coudée 115 dont le rayon de courbure $R_{115}$ est de 50 mm, c'est-à-dire largement inférieur au rayon de courbure $R_{110}$ autour de l'axe $X_{100}$. Cette partie coudée 115 a pour effet de donner une accélération centrifuge intense et localisée à chaque écoulement unitaire $E_1$. Cette accélération centrifuge localisée a pour effet de commencer à diriger les particules solides d'un écoulement unitaire $E_1$ pénétrant dans un conduit 110 en direction de la tôle extérieure 112 de ce conduit.

Compte tenu de l'effet différencié de l'accélération centrifuge qui résulte du trajet en spirale de l'écoulement $E_1$ dans le reste du conduit 110, ces particules se rapprochent ensuite de plus en plus de la tôle externe 112. Ainsi, les particules solides ont tendance à s'accumuler au voisinage de la tôle externe 112 de chaque conduit 110.

Dans la mesure où l'effet de séparation des particules solides dépend de la vitesse radiale et de la vitesse tangentielle $V_{110}$ de l'écoulement $E_1$ dans chaque conduit 110, il est préférable que la pression hydraulique d'entrée de l'écoulement E dans le dispositif 100 soit relativement élevée. C'est pourquoi le dispositif 100 est disposé en partie basse de la conduite forcée 5, c'est-à-dire dans la partie aval de celle-ci. Selon une variante non représentée de l'invention, le dispositif 100 peut être installé dans une partie intermédiaire de la conduite 5, pour autant que la pression hydraulique de l'écoulement est suffisante.

Au voisinage de l'extrémité aval 116 d'un conduit 110, une tôle de séparation 117 est disposée à une distance radiale non nulle $d_{117}$ de la tôle externe 112 de chaque conduit 110, de telle sorte qu'il est défini, entre les tôles 112 et 117, une fente 118 dans laquelle s'écoule la portion $E_2$ de l'écoulement unitaire $E_1$ la plus chargée en particules solides puisque celles-ci se sont accumulées au voisinage de la tôle 112 en cheminant dans le conduit 110. Un drain 119 est raccordé en aval de chaque fente 118 et les différents drains des conduits 119 sont eux-mêmes raccordés à une conduite non représentée d'évacuation de la portion de l'écoulement E la plus fortement chargée en particules solides. La distance $d_{117}$ est l'épaisseur de la fente 118.

En pratique, la distance $d_{117}$ peut être de l'ordre de 0,5 mm, de sorte que la portion $E_2$ de chaque écoulement $E_1$ prélevée pour être acheminée vers les drains 119 est minime par rapport à cet écoulement. Le rapport $d_{117}/e_{110}$ est choisi inférieur à 1/50. Il est avantageusement de l'ordre de 1/100, comme dans l'exemple représenté. Ce rapport est choisi avec une valeur faible car l'écoulement $E_2$ correspond à un pourcentage d'eau perdue.

La partie restante $E_3$ de chaque écoulement $E_1$ est alors dirigée vers un volume $V_1$ défini radialement autour des conduits 110 et bordé radialement sur l'extérieur par une tôle 130 de forme cylindrique à section circulaire. Ce volume $V_1$ débouche dans un volume $V_2$ défini entre la partie 103 et le collecteur 102, de telle sorte que les différentes portions $E_3$ des écoulements $E_1$ qui ne sont pas déviées vers les drains 119 sont dirigées ensemble vers la bâche 6 à travers l'ouverture pour alimenter la turbine 1.

Selon un aspect de l'invention qui est représenté en traits mixtes uniquement à la figure 7, il est possible de prévoir une deuxième tôle de séparation 121 au voisinage de la tôle interne 111 d'un conduit 110, ce qui permet de

prélever la portion $E_4$ de l'écoulement $E_1$ la moins chargée en particules solides. Cette portion d'écoulement $E_4$ peut être collectée, comme avec les drains 119 mais avec des conduits spécifiques, pour constituer une source d'eau particulièrement propre ou « eau claire » qui peut être utilisée dans l'installation I à des fins spécifiques, comme le refroidissement de l'alternateur 4 ou le gavage d'un palier hydrostatique. Le nombre de conduits 110 équipés d'une tôle 121 est déterminé en fonction du débit d'eau claire souhaité.

L'invention a été décrite en référence au cas où l'écoulement dans un conduit 110 a lieu dans le sens croissant du rayon de courbure $R_{110}$ du conduit 110. En d'autres termes, l'extrémité amont 113 d'un conduit 110 est plus proche de l'axe $X_{100}$ que son extrémité aval 116. Il est toutefois possible de prévoir un écoulement en sens inverse, c'est-à-dire dans un sens correspondant à une diminution du rayon $R_{110}$. En effet, une accélération centrifuge des particules solides est également obtenue dans ce cas.

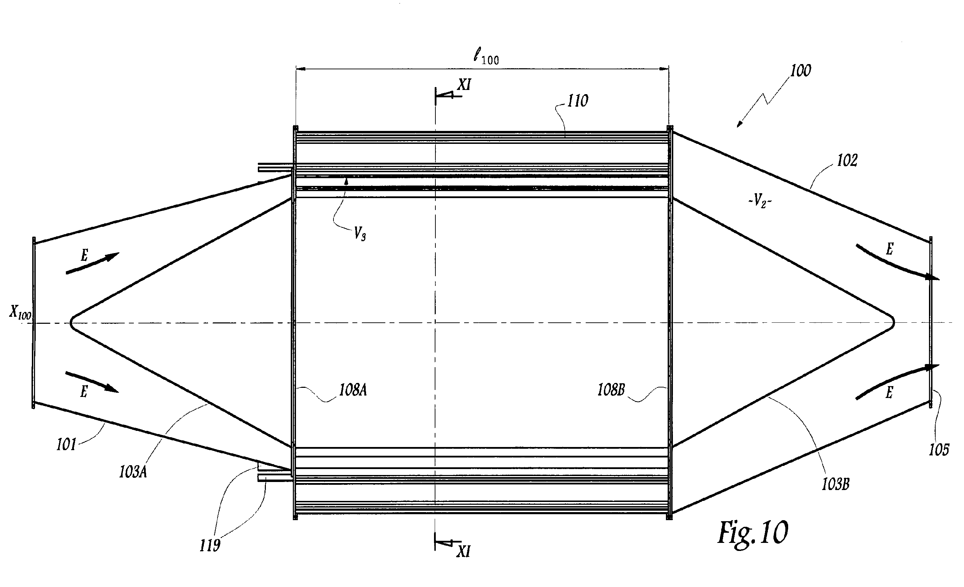

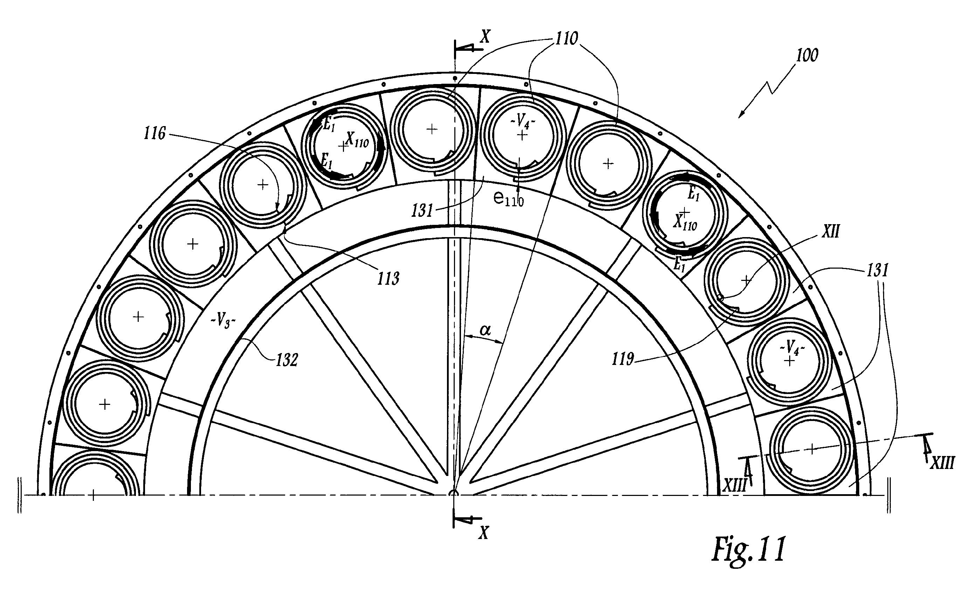

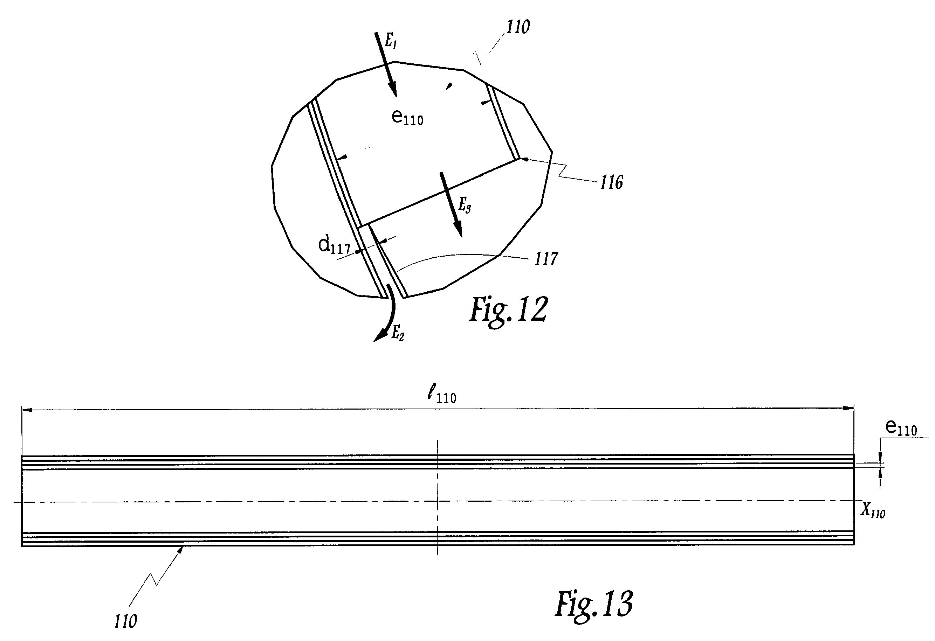

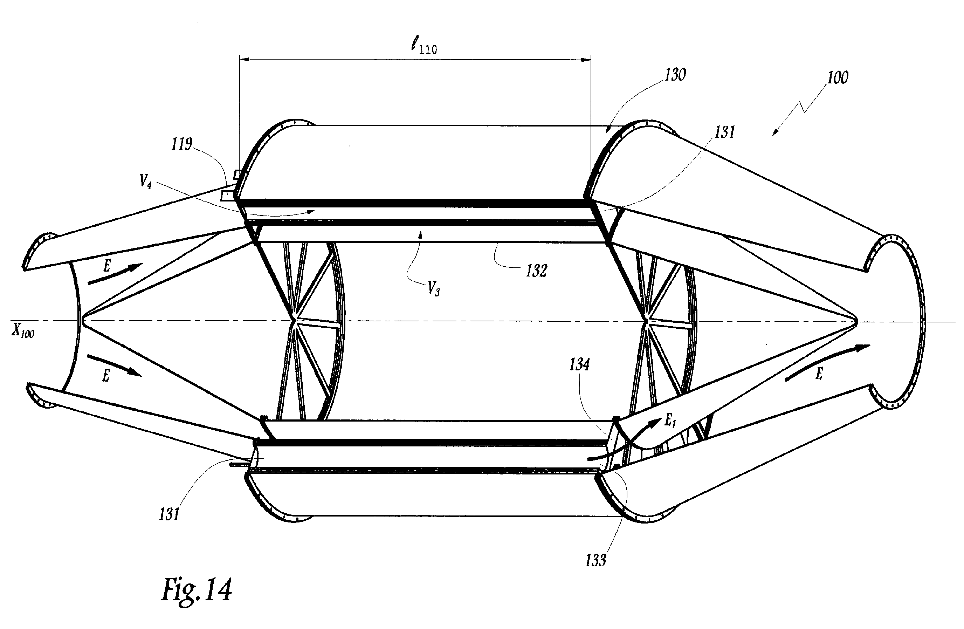

Dans le second mode de réalisation selon l'invention représenté aux figures 10 à 14, les éléments analogues à ceux du premier mode de réalisation portent des références identiques.

Le dispositif 100 de ce mode de réalisation comprend vingt cinq conduits 110 présentant chacun une forme de spirale dans un plan perpendiculaire à un axe $X_{100}$ de progression de l'écoulement E entre une zone d'entrée 104 et une zone de sortie 105. Chaque conduit 110 est formé par une tôle 111 plane parallèlement à l'axe $X_{100}$ et conformée en spirale perpendiculairement à cet axe.

Chaque conduit 110 est disposé dans un boîtier 131 définissant un secteur angulaire d'angle au sommet $\alpha$ égal à 14,4° environ. Dans un plan perpendiculaire à l'axe $X_{100}$, chaque conduit 110 présente un profil en spirale centré sur un axe $X_{110}$ parallèle à l'axe $X_{100}$, avec une épaisseur $e_{110}$ très inférieure à sa largeur $l_{110}$ prise parallèlement à l'axe $X_{100}$. Les valeurs de $e_{110}$ et $l_{110}$ peuvent être les mêmes ou du même ordre de grandeur que celles mentionnées en référence au premier mode de réalisation.

Une partie conique 103B est disposée à l'intérieur d'un collecteur 102 de sortie du dispositif 100, comme dans le premier mode de réalisation, alors qu'une autre partie conique 103A est disposée dans un conduit d'entrée tronconique et divergent 101. La partie conique 103A permet de faire diverger radialement l'écoulement E jusqu'à un volume $V_3$ proche des conduits 110, situé radialement à l'intérieur des boîtiers 131 et autour d'une tôle 132 de forme circulaire centrée sur l'axe $X_{110}$.

Un écoulement unitaire $E_1$ engagé dans un conduit 110 progresse dans un sens qui le rapproche de l'axe $X_{110}$. En d'autres termes, l'extrémité amont ou zone d'entrée 113 du conduit 110 est plus éloignée de l'axe $X_{110}$ que sa zone de sortie. Chaque écoulement unitaire $E_1$ passe, à travers un conduit 110, du volume $V_3$ vers un volume central $V_4$ définit radialement au centre de chaque conduit 110. Chaque volume $V_4$ débouche, à travers une ouverture 133 ménagée dans une face d'extrémité 134 d'un boîtier 131, dans un volume $V_2$ comparable à celui du premier mode de réalisation.

Une circulation en sens inverse est toutefois envisageable.

Deux croisillons 108A et 108B permettent de rigidifier les parties coniques 103A et 103B et la tôle 132.

Un écoulement $E_1$ s'écoule, parallèlement à l'axe $X_{100}$, entre un orifice 104 d'entrée du conduit 101 et une ouverture 105 de sortie du collecteur 102, en passant autour de la partie 103A, dans le volume $V_3$, dans les conduits 110, puis dans un volume $V_4$ et dans le volume $V_2$, autour de la partie 103B.

Comme précédemment, compte tenu du profil en spirale des conduits 110, chacun autour d'un axe central $X_{110}$, un écoulement unitaire $E_1$ engagé dans un conduit 110 subit une accélération centrifuge à effet différencié, ce qui permet de séparer rapidement et efficacement, par centrifugation, les particules solides des molécules d'eau constituant cet écoulement.

Comme dans le premier mode de réalisation, un séparateur 117 est prévu à la sortie 116 de chaque conduit 110, ce qui permet d'alimenter des drains 119 avec la portion $E_2$ de chaque écoulement unitaire $E_1$ la plus chargée en particules solides. Les séparateurs sont formés par des plaques 117 disposées au voisinage de la partie de la tôle 111 formant la partie radiale externe de l'extrémité aval 116 des conduits 110. La distance radiale $d_{117}$ entre chaque plaque 117 et la partie la plus proche de la tôle 111 est, non nulle mais très inférieure à l'épaisseur $e_{110}$. Le rapport $d_{117}/e_{110}$ peut avoir les mêmes valeurs que dans le premier mode de réalisation. Il est inférieur à 1/50, de préférence de l'ordre de 1 /100.

La portion $E_3$ de l'écoulement $E_1$ qui n'est pas dirigée vers un drain 119 parvient dans un volume central $V_4$ défini par le conduit 110.

Comme dans le premier mode de réalisation et selon un aspect de l'invention qui n'est pas représenté, un piquage d'eau claire peut être prévu si nécessaire, au niveau d'un ou des plusieurs conduits 110.

Quel que soit le mode de réalisation, une installation de conversion d'énergie conforme à l'invention peut comprendre un ou plusieurs dispositifs 100 disposés en parallèle sur la ligne d'alimentation de la machine hydraulique.

Les caractéristiques techniques des différents modes de réalisation décrits peuvent être combinées dans le cadre de la présente invention.

L'invention a été décrite dans le cadre de son utilisation avec une turbine 1. Elle est toutefois applicable avec une pompe ou une turbine-pompe fonctionnant en mode turbine. Dans ce cas, l'installation incorporant une telle machine hydraulique peut également convertir l'énergie mécanique ou électrique en énergie hydraulique.

**Revendications**

1.  Dispositif (100) de séparation de particules solides et de l'eau d'un écoulement (E) d'alimentation d'une machine hydraulique (1) de type turbine, pompe ou turbine-pompe, ce dispositif comprenant une zone d'entrée (104) de l'écoulement et une zone de sortie (105) de l'écoulement décalées le long d'un axe ($X_{100}$) de progression de l'écoulement dans le dispositif, **caractérisé en ce que** le dispositif comprend plusieurs conduits (110) disposés en parallèle chacun avec une embouchure (114) et une extrémité aval (116), entre la zone d'entrée (104) et la zone de sortie (105), **en ce que** chaque conduit (110) présente, en coupe perpendiculaire à l'axe de progression ($X_{100}$), une section en forme de spirale avec un rayon de courbure ($R_{100}$) croissant de l'embouchure vers l'extrémité aval ou de l'extrémité aval vers l'embouchure, **en ce que** chaque conduit présente une épaisseur ($e_{110}$), prise selon une direction globalement radiale par rapport à l'axe de progression ($X_{100}$), inférieure à 10% de la largeur ($l_{110}$) de ce conduit, prise parallèlement à cet axe et **en ce que** chaque conduit est équipé, en sortie, d'un séparateur de flux (117) apte à séparer une première portion ($E_2$) d'un écoulement unitaire ($E_1$) circulant dans le conduit, fortement chargée en particules solides par effet centrifuge, d'une deuxième portion ($E_3$) de cet écoulement, qui est moins chargée en particules solides.

2.  Dispositif selon la revendication 1, **caractérisé en ce que** l'épaisseur ($e_{110}$) de chaque conduit (110) est inférieure à 5%, de préférence inférieure à 1%, de la largeur ($l_{110}$) du conduit.

3.  Dispositif selon l'une des revendications précédentes, **caractérisé en ce que** l'épaisseur ($e_{110}$) de chaque conduit (110) a une valeur inférieure à 100 mm, de préférence inférieure à 60 mm, de préférence encore de l'ordre de 50 mm.

4.  Dispositif selon l'une des revendications précédentes, **caractérisé en ce que** chaque conduit (110) a une section d'entrée de forme rectangulaire aplatie avec sa plus grande dimension ($l_{110}$) parallèle à l'axe de progression ($X_{110}$).

5.  Dispositif selon l'une des revendications précédentes, **caractérisé en ce que** le séparateur de flux est formé par une cloison (117) disposée dans le conduit au voisinage et à distance ($d_{117}$) d'une cloison radiale (111, 112) du conduit.

6.  Dispositif selon l'une des revendications précédentes, **caractérisé en ce que** chaque conduit (110) comprend, au voisinage de son entrée, une zone (115) dont le rayon de courbure ($R_{115}$), mesuré dans un plan perpendiculaire à l'axe de progression ($X_{100}$), est inférieur à 25% du rayon de courbure maximum ($R_{110}$) du conduit dans ce plan.

7.  Dispositif selon l'une des revendications précédentes, **caractérisé en ce que** les conduits (110) sont imbriqués les uns dans les autres autour de l'axe de progression ($X_{100}$).

8.  Dispositif selon l'une des revendications 1 à 6, **caractérisé en ce que** les conduits (110) sont répartis, chacun dans un secteur angulaire, autour de l'axe de progression ($X_{100}$).

9.  Dispositif selon l'une des revendications précédentes, **caractérisé en ce que** chaque conduit est formé par une ou deux tôles métalliques (111, 112) rectilignes selon leur direction parallèle à l'axe de progression ($X_{100}$).

10. Installation (I) de conversion d'énergie hydraulique en énergie électrique ou mécanique, ou inversement, cette installation comprenant une machine hydraulique (1) de type turbine, pompe ou turbine-pompe, et une ligne d'alimentation (3, 5, 6) en eau de la machine, **caractérisé en ce qu'**elle comprend au moins un dispositif (100) de séparation de particules solides et d'eau selon l'une des revendications précédentes.

**Claims**

1.  A device (100) for separating solid particles from water in a flow (E) feeding a hydraulic machine (1) of the turbine, pump, or turbine-pump type, the device having a flow inlet zone (104) and a flow outlet zone (105) that are spaced apart along an advance axis ($X_{100}$) of flow advance through Lhe device, wherein the device comprises a plurality of ducts (110) placed in parallel, each having a mouth (114) and a downstream end (116) between the inlet zone (104) and an outlet zone (105), wherein, in section perpendicular to the advance axis ($X_{100}$), each duct (110) presents a section of spiral shape with a radius of curvature ($R_{100}$) increasing from the mouth towards the downstream end or from the downstream end towards the mouth, wherein each duct presents a thickness ($e_{110}$) measured in a direction that is generally radial relative to the advance axis ($X_{100}$) that is less than 10% of the width ($\ell_{110}$) of said

duct, measured parallel to said axis and wherein each duct is fitted, at its outlet, with a flow separator (117) suitable for separating a first portion ($E_2$) of an elementary flow ($E_1$) flowing in the duct from a second portion ($E_3$) thereof, the first portion being heavily burdened with solid particles by centrifugal effect, while the second portion has a lighter burden of solid particles.

2. A device according to claim 1, wherein the thickness ($e_{110}$) of each duct (110) is less than 5%, and preferably less than 1% of the width ($\ell_{110}$) of the duct.

3. A device according to any preceding claim, wherein the thickness ($e_{110}$) of each duct (110) has a value of less than 100 mm, preferably less than 60 mm, more preferably equal to about 50 mm.

4. A device according to any preceding claim, wherein each duct (110) has an inlet section of flat rectangular shape with its long dimension ($\ell_{100}$) parallel to the advance axis ($X_{110}$) .

5. A device according to any preceding claim, wherein the flow separator is formed by a partition (117) placed in the duct close to a radial partition (111, 112) of the duct, and at a distance ($d_{117}$) therefrom.

6. A device according to any preceding claim, wherein, in the vicinity of its inlet, each duct (110) includes a zone (115) of radius of curvature ($R_{115}$), measured in a plane perpendicular to the advance axis ($X_{100}$), that is less than 25% of the maximum radius of curvature ($R_{110}$) of the duct in said plane.

7. A device according to any preceding claim, wherein the ducts (110) are interleaved one in another around the advance axis ($X_{100}$).

8. A device according to any one of claims 1 to 6, wherein the ducts (110) are distributed in respective angular sectors around the advance axis ($X_{100}$).

9. A device according to any preceding claim, wherein each duct is formed by one or two metal sheets (111, 112) that are rectilinear in their direction parallel to the advance axis ($X_{100}$).

10. An installation (I) for converting hydraulic energy into electrical or mechanical energy, or vice versa, said installation comprising a hydraulic machine (1) of the turbine, pump, or turbine-pump type, and a line (3, 5, 6) for feeding the machine with water, wherein said installation includes at least one device (100) in accordance with any preceding claim, for separating solid particles from water.

**Patentansprüche**

1. Vorrichtung (100) zur Trennung von festen Teilchen und Wasser in einem Zufuhrstrom (E) einer Wasserkraftmaschine (1) der Turbinen-, Pumpen- oder Turbinenpumpenart, wobei diese Vorrichtung eine Zone des Eintritts (104) des Stroms und eine Zone des Austritts (105) des Stroms umfasst, die längs einer Achse ($X_{100}$) des Fließens des Stroms in der Vorrichtung versetzt sind, **dadurch gekennzeichnet, dass** die Vorrichtung mehrere Leitungen (110), die parallel angeordnet sind und jeweils eine Mündung (114) und ein stromabwärtiges Ende (116) aufweisen, zwischen der Eintrittszone (104) und der Austrittszone (105) umfasst und dass jede Leitung (110) in einem zur Flussachse ($X_{100}$) senkrechten Schnitt einen Abschnitt in Form einer Spirale mit einem Biegeradius ($R_{100}$) aufweist, der von der Mündung zu dem stromabwärtigen Ende oder von dem stromabwärtigen Ende zu der Mündung zunimmt, und dass jede Leitung eine Dicke ($e_{110}$) hat, die, gemäß einer im Gesamten radial im Verhältnis zur Flussachse ($X_{100}$) betrachtet, weniger als 10 % der Breite ($I_{110}$) dieser Leitung, parallel zu dieser Achse betrachtet, ausmacht, und dass jede Leitung am Austritt mit einer Flusstrennvorrichtung (117) ausgestattet ist, die einen ersten Teil ($E_2$) eines einheitlichen, in der Leitung zirkulierenden Stroms ($E_1$), der stark mit festen Teilchen belastet ist, durch Zentrifugenwirkung von einem zweiten Teil ($E_3$) dieses Stroms, der weniger mit festen Teilchen belastet ist, zu trennen.

2. Vorrichtung nach Anspruch 1, **dadurch gekennzeichnet, dass** die Dicke ($e_{110}$) jeder Leitung (110) weniger als 5 %, vorzugsweise weniger als 1 % der Breite ($I_{110}$) der Leitung ausmacht.

3. Vorrichtung nach einem der vorhergehenden Ansprüche, **dadurch gekennzeichnet, dass** die Dicke ($e_{110}$) jeder Leitung (110) einen Wert aufweist, der weniger als 100 mm, vorzugsweise weniger als 60 mm, weiter bevorzugt in der Größenordnung von 50 mm beträgt.

4.  Vorrichtung nach einem der vorhergehenden Ansprüche, **dadurch gekennzeichnet, dass** jede Leitung (110) einen Eintrittsabschnitt in abgeflachter rechteckiger Form aufweist, dessen lange Seite ($I_{110}$) zur Flussachse ($X_{110}$) parallel ist.

5.  Vorrichtung nach einem der vorhergehenden Ansprüche, **dadurch gekennzeichnet, dass** die Flusstrennvorrichtung von einer Wand (117) gebildet wird, die in der Leitung in der Nähe und in einem Abstand ($d_{117}$) von einer Radialwand (111, 112) der Leitung angeordnet ist.

6.  Vorrichtung nach einem der vorhergehenden Ansprüche, **dadurch gekennzeichnet, dass** jede Leitung (110) in der Nähe ihres Eintritts eine Zone (115) umfasst, deren Biegeradius ($R_{115}$), in einer zur Flussachse ($X_{100}$) senkrechten Ebene gemessen, weniger als 25 % des maximalen Biegeradius ($R_{110}$) der Leitung in dieser Ebene ausmacht.

7.  Vorrichtung nach einem der vorhergehenden Ansprüche, **dadurch gekennzeichnet, dass** die Leitungen (110) um die Flussachse ($X_{100}$) ineinander verschachtelt sind.

8.  Vorrichtung nach einem der Ansprüche 1 bis 6, **dadurch gekennzeichnet, dass** die Leitungen (110) jeweils in einem Winkelsektor um die Flussachse ($X_{100}$) verteilt sind.

9.  Vorrichtung nach einem der vorhergehenden Ansprüche, **dadurch gekennzeichnet, dass** jede Leitung von einem oder mehreren Metallblechen (111, 112) gebildet wird, die längs ihrer Richtung parallel zur Flussachse ($X_{100}$) geradlinig sind.

10. Anlage (I) zur Umwandlung von Wasserkraft in elektrische oder mechanische Energie oder umgekehrt, wobei die Anlage eine Wasserkraftmaschine (1) der Turbinen-, Pumpen oder Turbinenpumpenart und eine Leitung (3, 5, 6) zum Zuführen von Wasser zu der Maschine umfasst, **dadurch gekennzeichnet, dass** sie mindestens eine Vorrichtung (100) zur Trennung von festen Teilchen und Wasser nach einem der vorhergehenden Ansprüche umfasst.

Fig.1

Fig.2

EP 2 147 710 B1

Fig.3

Fig.7

$\ell_{100}$

$V$

$X_{100}$

$111$

$112$

$e_{110}$

$110$

$V$

*Fig.4*

$IV$

$110$

$112$

$111$

$VI$

$R_{110}$

$X_{100}$

$e_{110}$

$IV$

*Fig.5*

$115$

$113$

$E_1$

$E_1$

$R_{115}$

$e_{110}$

$114$

$111$

$112$

$110$

*Fig.6*

Fig.8

EP 2 147 710 B1

*Fig.9*

Fig.10

*Fig.11*

EP 2 147 710 B1

Fig.12

Fig.13

18

Fig.14

EP 2 147 710 B1

*Fig.15*